# EUROPEAN PATENT SPECIFICATION

(11) **EP 3 871 017 B1**
(45) Date of publication and mention of the grant of the patent: **03.12.2025**
(21) Application number: 18938960.4
(22) Date of filing: 28.10.2018
(51) Int. Cl.: G01V 1/30, G01V 1/36

(54) **SYSTEMS AND METHODS FOR SEISMIC INVERSION DRIVEN VELOCITY ANALYSIS**
SYSTEME UND VERFAHREN ZUR SEISMISCHEN INVERSIONSGETRIEBENEN GESCHWINDIGKEITSANALYSE
SYSTÈMES ET PROCÉDÉS D'ANALYSE DE VITESSE COMMANDÉE PAR INVERSION SISMIQUE

(43) Date of publication of application: 01.09.2021
(73) Proprietor: Abu Dhabi National Oil Company (ADNOC), Abu Dhabi (AE)
(72) Inventor: MAHGOUB, Mohamed, Abu Dhabi (AE); ALMESSABI, Saif, Abu Dhabi (AE); OBAID, Khalid, Abu Dhabi (AE)
(74) Representative: Bardehle Pagenberg Partnerschaft mbB Patentanwälte Rechtsanwälte
(86) International application number: PCT/IB2018/058422
(87) International publication number: WO 2020/089670

(56) References cited:
- WO-A1-2018/140783
- WO-A1-96/07935
- WO-A2-2004/095070
- US-A1- 2003 021 184
- US-A1- 2014 350 861
- STARK TRACY J. ET AL: "Prestack spectral blueing: A tool for increasing seismic resolution", 1 January 2008 (2008-01-01), pages 854 - 858, XP055915159, Retrieved from the Internet <URL:http://dx.doi.org/10.1190/1.3063776> [retrieved on 20220425], DOI: 10.1190/1.3063776

## Description

### FIELD OF THE INVENTION

The present disclosure relates generally to the enhancement and optimization of acquiring seismic data. The present invention relates to systems and methods for accurately selecting P-wave velocity based on density volumes in low reflectivity reservoirs.

### BACKGROUND OF THE INVENTION

Seismic waves are commonly used to explore for oil and natural gas below the surface of earth. Seismic waves are generated by seismic energy sources, which seismic waves in the ground. As seismic wave travels deep into the Earth, it is reflected by rock boundaries, which display different density and elastic wave propagation velocity. Seismic wave is refracted and reflected at the boundary, and then travels back to the ground surface. Special sensors, e.g. geophones/hydrophones receive the signal and transmit it to recording units. Geophysicists use those seismic recorded data to learn about oil and gas reservoirs located beneath Earth's surface.

Arab reservoirs are characterized by low seismic impedance contrast, which makes velocity analysis extremely difficult across on-shore and offshore different locations in the Gulf countries, e.g. Abu Dhabi. This problem is also seen in other parts of the world with similar low reflectivity reservoir types.

Previously, wells were used to guide seismic velocity analysis, so old methods face restrictions in new fields where which don't have a lot of wells, the limitation of this method is clearly visible. Moreover, in case there are many wells, the old method does not apply between the wells.

Additionally, currently used derived equations that relate seismic P-wave velocities are ineffective when dealing with carbonate rock lithology due to the heterogeneous nature of carbonate rock types. Gardner's equation is an empirically derived equation that relates seismic P-wave velocity to the bulk density of the lithology in which the wave travels (Gardner, 1974). Gardner's equation is not valid in the Arab reservoir carbonate rock lithology, which is heterogeneous rock types, and real density measurements have to be used to compute impedance.

Accordingly, there remains the need for reliable and accurate, yet sensitive tools for enhancing and optimizing the seismic processing of any seismic data in low reflective reservoirs, hence to provide advantages in characterizing reservoirs and to enable seismic end-users to perform better mapping of the target, proper well placement, and better reserves' estimation.

WO 96/07935 A1 discloses a method for deriving reservoir lithology and fluid content for a target location from pre-stack seismic reflection data. The method uses inversion of pre-stack seismic reflection data for both the target location and a calibration location having known subsurface lithology and fluid content to derive the subsurface lithology and fluid content at the target location.

### SUMMARY OF THE INVENTION

The Summary of this invention is not intended to identify key features or essential features of the claimed subject matter, nor is it intended to be used as an aid in determining the scope of the claimed subject matter. The claimed invention relates to a system and method for accurate selection of *P*-wave velocities based on density volumes in low reflectivity reservoirs. More specifically, the claimed invention relates to systems and methods to determine accurate velocity and to use this accurate velocity for optimized pre-stack time and pre-stack depth seismic imaging.

The claimed invention provides a solution in order to overcome a problem specifically arising in the realm of seismic velocity analysis in low *P* wave and *S* impedance contrast reservoirs, and more particularly in Arab reservoir carbonate rock lithology with heterogeneous rock types. The claims provide a system and method that provide *P*-wave velocity selection based on density volumes in low reflectivity reservoirs, to determine accurate velocity, and to use this accurate velocity for optimized the seismic data pre-stack time and pre-stack depth imaging. Collectively, the embodiments of the present invention provide for a Seismic Inversion Driven Velocity Analysis (SIDVA). The claimed invention overcomes the limitations of current methods and systems, and more specifically provides advantages in characterizing reservoirs, enabling a user to perform better mapping of the target, proper well placement, and better reserves' estimation. Additionally, the embodiments and aspects of the present invention provide other benefits that will become clear to those skilled in the art from the foregoing description.

Accordingly, in one aspect, the present invention provides for a method for obtaining an enhanced seismic data according to claim 1. The method comprising: determining a velocity volume for a subsurface region of interest; determining a density volume, by interpolating wells-density-logs along seismic interpretation horizon. The impedance background model is computed using the velocity and density volumes of the subsurface region of interest. Moreover, applying spectral blueing for boosting lessened higher frequencies of a seismic band; scaling of seismic amplitudes to reflectivity, to create a seismic inverted perturbed data stack. The selection of the *P* wave seismic velocity using the seismic inverted perturbed data stack; computing velocity perturbations of the selected *P* wave seismic velocity to generate an accurate *P* wave seismic velocity. Applying the accurate *P* wave seismic velocity will improve the seismic spatial continuity of such low reflectivity reservoir and could be mapped with confidence throughout the seismic surveys.

The subsurface region of interest is a low reflectivity reservoir. In some embodiments, the low reflectivity reservoir is a low *P* wave and *S* impedance contrast reservoir. In some embodiments, the low reflectivity reservoir type is Arab carbonate rock lithology with heterogeneous rock types.

In embodiments of the present invention, the accurate *P* wave seismic velocity is essential for determining optimized seismic pre-stack time, pre-stack depth images, and time to depth conversion.

In some embodiments, the velocity and density volumes comprising data indicative of at least one seismic survey of the subsurface region of interest. In other embodiments, the velocity volume is an indication of seismic velocities at each position in the subsurface region of interest. In embodiments of the present invention, the wells-density-logs are real density measurements performed in drilled boreholes.

In another aspect, the present invention further provides for a non-transitory computer readable medium storing specific computer-executable instructions for obtaining an enhanced seismic data in low reflectivity reservoirs according to claim 3. When executed by a processor, cause a computer system to automatically at least: determining a velocity volume for the low reflectivity reservoirs; determining a density volume for the low reflectivity reservoirs by interpolating wells-density-logs along seismic interpretation horizon. Computing an impedance background model using the velocity and density volumes of the low reflectivity reservoirs; applying spectral blueing for boosting lessened higher frequencies of a seismic band. Scaling of seismic amplitudes to reflectivity, to create a seismic inverted perturbed data stack. Selecting a *P* wave seismic velocity using the seismic inverted perturbed data stack; computing velocity perturbations of the selected *P* wave seismic velocity to generate an accurate *P* wave seismic velocity; applying the accurate *P* wave seismic velocity in acquiring the enhanced seismic data in the low reflectivity reservoirs.

According to the present invention, the subsurface region of interest is a low reflectivity reservoir. In these aspects, the low reflectivity reservoir is a low *P* wave and *S* impedance contrast reservoir. In some aspects, the low reflectivity reservoirs are Arab reservoir's carbonate rock lithology with heterogeneous rock types.

In some aspects, the accurate *P* wave seismic velocity is essential for determining optimized seismic pre-stack time, pre-stack depth images, and depth conversion.

In other aspects, the velocity and density volumes comprising data indicative of at least one seismic survey in the subsurface region of interest. In different aspects, the velocity volume is an indication of seismic velocities at each position in the low reflectivity reservoirs. In some aspects, the wells-density-logs are real density measurements performed in drilled boreholes.

According to another aspect, the invention provides for a system for providing an enhanced seismic data according to claim 4. The system compnsing (a) a computer server that stores a plurality of seismic data sets of a subsurface region of interest; (b) One or more computer storage media having computer-usable instructions. Using one or more computing devices, cause the one or more computing devices to perform a method for obtaining the enhanced seismic data by selecting an accurate P wave seismic velocity. The method comprising: determining a velocity volume for the subsurface region of interest; determining a density volume for the subsurface region of interest, by interpolating wells-density-logs along seismic interpretation horizon; computing an impedance background model using the velocity and density volumes of the subsurface region of interest; applying spectral blueing for boosting lessened higher frequencies of a seismic band; scaling of seismic amplitudes to reflectivity, to create a seismic inverted perturbed data stack; selecting a *P* wave seismic velocity using the seismic inverted perturbed data stack; computing velocity perturbations of the selected *P* wave seismic velocity to generate the accurate *P* wave seismic velocity; applying the accurate *P* wave seismic velocity in acquiring the enhanced seismic data.

The subsurface region of interest is a low reflectivity reservoir type. In these embodiments, the low reflectivity reservoir is a low *P* wave and *S* impedance contrast reservoir. In some embodiments, the low reflectivity reservoir type is Arab reservoir's carbonate rock lithology with heterogeneous rock types.

In some embodiments, the accurate *P* wave seismic velocity is essential for determining optimized seismic pre-stack time, pre-stack depth images, and depth conversion.

In some embodiments, the velocity and density volumes comprising data indicative of at least one seismic survey in the low reflectivity reservoirs. In embodiments of the present invention, the velocity volume is an indication of seismic velocities at each position in the subsurface region of interest. In different embodiments, the wells-density-logs are real density measurements performed in drilled boreholes.

Hereinafter the different embodiments and aspects of the present invention is described in detail. It should be noted and understood that there can be improvements and modifications made of the present invention described in detail below without departing from the scope of the invention as set forth in the accompanying claims.

### BRIEF DESCRIPTION OF THE DRAWINGS

**Figure 1** depicts a diagram illustrating an operating environment suitable for practicing an embodiment of the present invention.
**Figure 2** depicts a flow diagram of a high level design or architecture, in accordance with certain embodiments of the present invention, illustrating a method of the present invention.
**Figure 3** depicts a diagram showing the seismic data quality improvement of the stack perturbations in accordance to the embodiments and aspects of the present invention.

### DETAILED DESCRIPTION OF THE INVENTION

It is an object of the present invention to provide superior tools for accurate selection of *P*-wave velocity based on density volumes in low reflectivity reservoirs. More particularly, the embodiments of the present invention provide for a system, method, or set of instructions embodied on one or more computer-readable media. In order to provide *P*-wave velocity selection based on density volumes in low reflectivity reservoirs, e.g. Arab reservoir's carbonate rock lithology with heterogeneous rock types, to determine accurate velocity and to use this accurate velocity for optimized seismic pre-stack time and pre-stack depth imaging. Collectively, the embodiments of the present invention provide for a Seismic Inversion Driven Velocity Analysis (SIDVA).

Arab reservoir is characterized by low seismic impedance contrast, which makes velocity analysis extremely difficult across onshore and offshore Abu Dhabi, due to the low reflectivity of the Arab reservoirs. This problem is also seen in other parts of the world with low reflectivity reservoir types.

Determining or selecting *P*-wave seismic velocity on seismic amplitude for low reflectivity seismic event is extremely difficult since it is hardly seen lateral stable wavelet and good stacking power. The prediction of density is a major goal in petroleum exploration. Seismically speaking, a relationship between velocities and rock densities can be estimated. Density prediction using both *P*-wave and *S*-wave velocities might improve, if both velocities are related to density. Therefore, working on density volumes is the alternative to pick the velocity on seismic inverted data with better stack continuity which leads to pick the *P* wave velocities with confidence for such low *P* wave and *S* impedance contrast reservoirs.

Reflectivity and impedance spectra both have exponential trends. To monitor the seismic data over complete seismic bandwidth, the data is split into frequency bands or perform pre-stack inversion to layer quantities. Density is estimated from seismic data by seismic inversion and density changes within the interval of interest can generate significant changes in the amplitudes and their variations with offsets.

Gardner's equation is an empirically derived equation that relates seismic P-wave velocity to the bulk density of the lithology in which the wave travels and real density measurements have to be used to compute impedance. Gardner's equation is not valid in the Arab interval since Arab reservoir is carbonate rock lithology, it is heterogeneous rock type, and real density measurements have to be used to compute impedance.

The embodiments of the present invention provide a workflow which comprises the following steps:
➢ The density volume will be created by interpolating wells density logs along seismic interpreted horizons.
➢ Computation of the impedance background model from velocity and density volumes.
➢ Scaling or correction of seismic amplitudes to the reflectivity.
➢ Spectral blueing was applied since the reflectivity has a blue spectrum, dominated by higher frequencies in comparison the impedance that is dominated low frequency red spectrum.
➢ Velocity perturbations of the picked velocity have been computed on the seismic inverted perturbed stack the data to pick the accurate velocity.

This workflow is conducted through running seismic patch processing runs via integration of the blued reflectivity with seismic colored inversion and QC the velocity perturbed seismic inverted stacks is done by seismic processing interactive velocity picking tools as well. Seismic processing software, *i.e.* CGG Geovation proprietary software, is used for running this present invention workflow.

***Well logging*** (borehole logging) is a detailed record (a well log) of the geologic formations penetrated by a borehole. Well logging is commonly performed in boreholes drilled for the oil and gas, groundwater, mineral and geothermal exploration, as well as part of environmental and geotechnical studies.

***Velocity volume*** is an indication of seismic velocities at each point in the region of interest. The initial velocity volume can be arbitrary, however once a seismic survey data is conducted, a faster convergence is expected (Claerbout, 1985). Alternatively, the velocity volume can be at least partly derived from other sources, e.g., well logs and/or expert judgment of the analyst. Initial stacking and analysis of the seismic traces generally reveals the rough outline of subsurface structures in the region of interest, which can be used in forming the initial velocity volume.

***Seismic interpretation*** infers geology at some depth from the processed seismic recorded data. The seismic record contains two basic elements, the shape of the reflection and the time of arrival of any reflection (or refraction) from a geological surface. The actual depth to this surface is a function of the thickness and velocity of overlying rock layers. The shape of the reflection, which includes how strong the signal is, what frequencies it contains, and how the frequencies are distributed over the pulse. The horizon, for the sake of this disclosure, can be considered as an imaginary surface in the subsurface of the earth, i.e. geological horizons, or even as striatal surfaces, but this is an over-simplification. Seismic is prone to multiple reflections, interference effects, and distortion due to the velocity field. Interpretation of seismic data needs good understanding of the subsurface formations and how this affect wave reception.

Seismic data lacks high frequencies and also is band-limited. This limits its vertical resolution in thin beds. The spectral peak of seismic data tends to be at a fairly low frequency compared to its total band. The seismic spectrum can be reshaped to better match the geological spectrum, as derived from logs, by boosting the higher seismic frequencies, in other words to convolve the seismic data. The result would be seismic data with boosted frequencies, *i.e. **Spectral blueing.***

In more detail, Yadav *et al.* explained that the observed behavior of reflectivity data obtained from wells which shows that higher frequencies are correlated with higher amplitudes, i.e. blue spectrum (Yadav, 2010). Yadav further stated that during processing of seismic data amplitudes are often whitened, making makes results difficult to interpret. Various authors have shown that boosting the more greatly attenuated higher frequencies (blue part) within the seismic band in order to match well-log-derived reflectivity can improve the resolution of seismic data. This method, known as spectral blueing includes designing and applying one or several operators to post-stack seismic data in order to enhance attenuated high frequencies within the frequency band. Yadav further proceeds to apply the blueing process to a set of seismic data, and showed that the application of spectral blueing improved seismic resolution.

In more detail, the aspects of the present invention provide for a system, method, or set of instructions embodied on one or more computer-readable media provide P-wave velocity selection based on density volumes in low reflectivity reservoirs. For the purpose of clarity, Computer-readable media include media implemented for storing information. Examples of stored information include computer-useable instructions, data structures, program modules, and other data representations. By way of example, and not limitation, computer-readable media may comprise computer storage media. Computer-readable media include both volatile and nonvolatile media, removable and non-removable media, and contemplate media readable by a database, a switch, and various other network devices. Media examples include hardware memory devices such as RAM, ROM, EEPROM, flash memory or other memory technology, CD-ROM, digital versatile discs (DVD), holographic media or other optical disc storage, magnetic cassettes, magnetic tape, magnetic disk storage, and other data storage devices. These technologies can store data shortly, temporarily, or permanently.

In a first aspect, a method is provided for obtaining an enhanced seismic data. The method comprises different steps to accurately determine P-wave velocity based on density volume of a subsurface region of interest, and more particularly using the accurate P wave seismic velocity in acquiring an enhanced seismic data.

In a second aspect, a non-transitory computer readable medium storing specific computer-executable instructions for obtaining an enhanced seismic data in low reflectivity reservoirs, when executed by a processor, cause a computer system to automatically determine an accurate P-wave velocity based on density volume of low reflectivity reservoirs.

In a third aspect, a system for providing an enhanced seismic data, the system comprising: (a) a computer server that stores a plurality of seismic data sets of a subsurface region of interest. (b) One or more computer storage media having computer-usable instructions that, when used by one or more computing devices, cause the one or more computing devices to perform a method for obtaining the enhanced seismic data by selecting an accurate P wave seismic velocity. The method comprising different steps to accurately determine P-wave velocity based on density volume of a subsurface region of interest, and more particularly using the accurate P wave seismic velocity in acquiring an optimized seismic data.

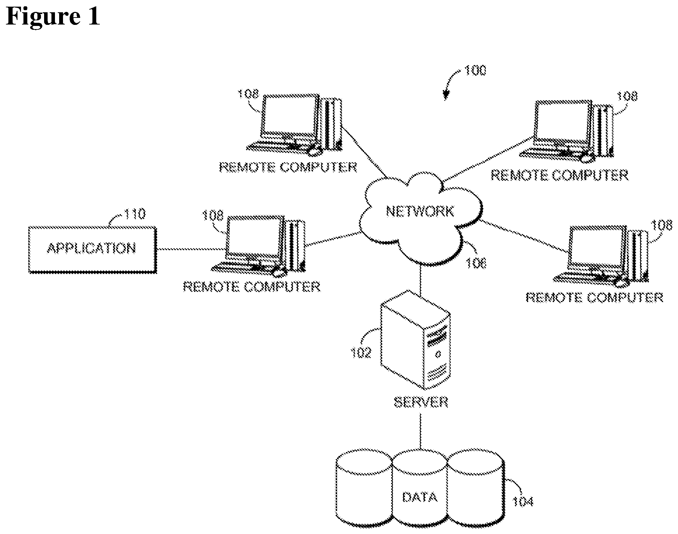

Having briefly illustrated embodiments of the present invention, an exemplary operating environment suitable for use in implementing embodiments of the present invention is described below. Referring to the drawings in general, and initially to **Figure 1** in particular, an exemplary computing system environment, for instance, a medical information computing system, on which embodiments of the present invention may be implemented is illustrated and designated generally as reference numeral **100.** It will be understood and appreciated by those of ordinary skill in the art that the illustrated medical information computing system environment **100** is merely an example of one suitable computing environment and is not intended to suggest any limitation as to the scope of use or functionality of the invention. Neither should the medical information computing system environment **100** be interpreted as having any dependency or requirement relating to any single component or combination of components illustrated therein.

The present invention is a special computing environment that can leverage well-known computing system environments or configurations. Examples of well-known computing systems, environments, and/or configurations that may be suitable for use with the present invention include, by way of example only, personal computers, server computers, handheld or laptop devices, multiprocessor systems, microprocessor-based systems, set top boxes, programmable consumer electronics, network PCs, minicomputers, mainframe computers, distributed computing environments that include any of the above-mentioned systems or devices, and the like.

The present invention may be described in the context of computer-executable instructions, such as program modules, being executed by a computer. Exemplary program modules include, but are not limited to, routines, programs, objects, components, and data structures that perform particular tasks or implement particular abstract data types. The present invention may also be practiced in distributed computing environments where tasks are performed by remote processing devices that are linked through a communications network. In a distributed computing environment, program modules may be located in local and/or remote computer storage media including, by way of example only, memory storage devices.

With continued reference to **Figure 1****,** the exemplary computing system environment **100** includes a general-purpose computing device in the form of a server **102.** Components of the server **102** may include, without limitation, a processing unit, internal system memory, and a suitable system bus for coupling various system components, including database cluster **104,** with the server **102.** The system bus may be any of several types of bus structures, including a memory bus or memory controller, a peripheral bus, and a local bus, using any of a variety of bus architectures. By way of example, and not limitation, such architectures include Industry Standard Architecture (ISA) bus, Micro Channel Architecture (MCA) bus, Enhanced ISA (EISA) bus, Video Electronic Standards Association (VESA) local bus, and Peripheral Component Interconnect (PCI) bus, also known as Mezzanine bus.

The server **102** typically includes, or has access to, a variety of computer-readable media, for instance, database cluster **104.** Computer-readable media can be any available media that may be accessed by server **102,** and includes volatile and nonvolatile media, as well as removable and non-removable media. By way of example, and not limitation, computer-readable media may include computer storage media and communication media. Computer storage media may include, without limitation, volatile and nonvolatile media, as well as removable and non-removable media implemented in any method or technology for storage of information, such as computer-readable instructions, data structures, program modules, or other data. In this regard, computer storage media may include, but is not limited to, RAM, ROM, EEPROM, flash memory or other memory technology, CD-ROM, digital versatile disks (DVDs) or other optical disk storage, magnetic cassettes, magnetic tape, magnetic disk storage, or other magnetic storage device, or any other medium which can be used to store the desired information and which may be accessed by the server **102.** Communication media typically embodies computer-readable instructions, data structures, program modules, or other data in a modulated data signal, such as a carrier wave or other transport mechanism, and may include any information delivery media. As used herein, the term "modulated data signal" refers to a signal that has one or more of its attributes set or changed in such a manner as to encode information in the signal. By way of example, and not limitation, communication media includes wired media such as a wired network or direct-wired connection, and wireless media such as acoustic, RF, infrared, and other wireless media. Combinations of any of the above also may be included within the scope of computer-readable media.

The computer storage media discussed above and illustrated in **Figure 1****,** including database cluster **104,** provide storage of computer-readable instructions, data structures, program modules, and other data for the server **102.**

The server **102** may operate in a computer network **106** using logical connections to one or more remote computers **108.** Remote computers **108** may be located at a variety of locations in a registration environment, for example, but not limited to, education, government, financial, clinical laboratories, entities and other in person settings, billing and financial offices, administration settings, etc. The remote computers **108** may also be physically located in nontraditional environments so that the entire community may be capable of integration on the network. The remote computers **108** may be personal computers, servers, routers, network PCs, peer devices, other common network nodes, or the like, and may include some or all of the components described above in relation to the server **102.** The devices can be personal digital assistants or other like devices.

Computer networks **106** comprise local area networks (LANs) and/or wide area networks (WANs). Such networking environments are commonplace in offices, enterprise-wide computer networks, intranets, and the Internet. When utilized in a WAN networking environment, the server **102** may include a modem or other means for establishing communications over the WAN, such as the Internet. In a networked environment, program modules or portions thereof may be stored in the server **102,** in the database cluster **104,** or on any of the remote computers **108.** For example, and not by way of limitation, various application programs may reside on the memory associated with any one or more of the remote computers **108.** For example, an application program **110** may reside on, and be executed by, server **102** or another server, in which case remote computer **108** would access application **110** remotely. It will be appreciated by those of ordinary skill in the art that the network connections shown are exemplary and other means of establishing a communications link between the computers (e.g., server **102** and remote computers **108**) may be utilized.

In operation, a user may enter commands and information into the server **102** or convey the commands and information to the server **102** via one or more of the remote computers **108** through input devices, such as a keyboard, a pointing device (commonly referred to as a mouse), a trackball, or a touch pad. Other input devices may include, without limitation, microphones, satellite dishes, scanners, or the like. Commands and information may also be sent directly from a remote healthcare device to the server **102.** In addition to a monitor, the server **102** and/or remote computers **108** may include other peripheral output devices, such as speakers and a printer.

Although many other internal components of the server **102** and the remote computers **108** are not shown, those of ordinary skill in the art will appreciate that such components and their interconnection are well known. Accordingly, additional details concerning the internal construction of the server **102** and the remote computers **108** are not further disclosed herein.

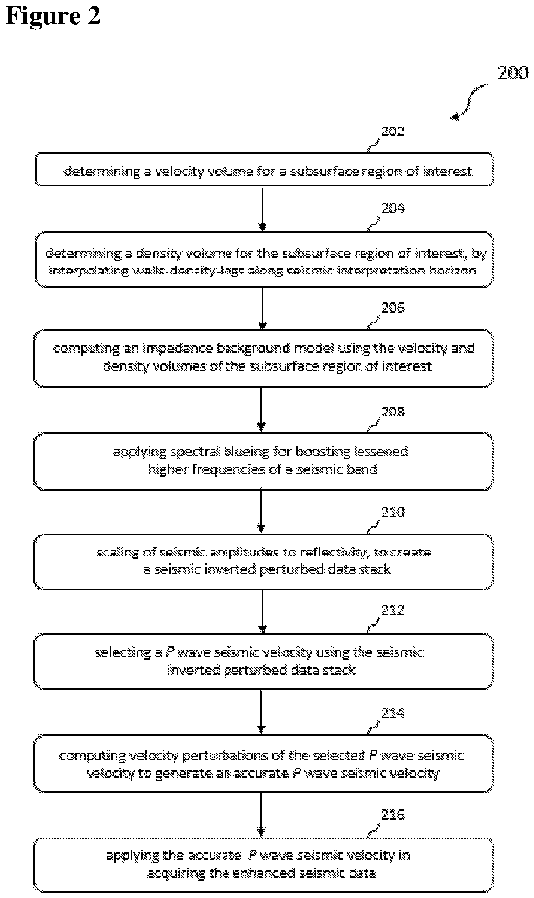

Turning now to **Figure 2****,** a flow diagram **200** depicts a more in detail design or architecture of the different steps of the "method for obtaining an enhanced seismic data." According to an embodiment illustrated in **Figure 2****,** there is a method for obtaining an enhanced seismic data that includes a step **202** of determining a velocity volume for a subsurface region of interest. A step **204** of determining a density volume for the subsurface region of interest, by interpolating wells-density-logs along seismic interpretation horizon; a step **206** of computing an impedance background model using the velocity and density volumes of the subsurface region of interest. A step **208** of applying spectral blueing for boosting lessened higher frequencies of a seismic band; a step **210** of scaling of seismic amplitudes to reflectivity, to create a seismic inverted perturbed data stack. A step **212** of selecting a *P* wave seismic velocity using the seismic inverted perturbed data stack; a step **214** of computing velocity perturbations of the selected *P* wave seismic velocity to generate an accurate *P* wave seismic velocity; and then a step **216** of applying the accurate *P* wave seismic velocity in acquiring the enhanced seismic data.

The present invention provides a method for picking seismic velocities to be applied on low reflectivity reservoirs in a seismic processing project. Velocity analysis has been found to be difficult for on- and off-shore wells, particularly in Abu Dhabi, due to the low reflectivity of the Arab reservoirs.

The currently used derived equations that relate seismic *P*-wave velocities are ineffective when dealing with carbonate rock lithology due to the heterogeneous nature of carbonate rock. As a result, real density measurements is used to compute impedance. Further, working on density volumes would be a better alternative to select the velocity on seismic inverted data with better stack continuity. This may lead to selection of *P*-wave velocities with greater confidence for low *P*-wave and *S*-wave impedance contrast reservoirs.

Significant changes in the amplitude of *P*-waves is used to estimate density within an interval of interest. Gardner's equation (which relates seismic *P*-wave velocity to density) is not valid in the Arab interval, as the Arab interval rock lithology is a heterogeneous rock type containing carbonates.

It is the object of the embodiments of the present invention to provide a method and system to estimate density for selecting *P*-wave velocities with significant confidence. The aspects of the present invention provide the following steps:
➢ The density volume will be created by interpolating wells density logs along seismic interpreted horizons;
➢ Computation of the impedance background model from velocity and density volumes;
➢ Scaling of seismic amplitudes to the reflectivity;
➢ Spectral blueing; and
➢ Velocity perturbations of the picked velocity be computed on the seismic inverted perturbed stack to pick the accurate velocity.

The seismic patch processing, through integration of blued reflectivity with seismic colored inversion and QC of the inverted stacks are done by using seismic interactive tools.

A skilled person in the art would appreciate that the prior art does not attempt to modify or enhance the nature of the process of acquiring seismic data, *i.e.* does not look to improve the method or manner in which the seismic data is acquired, but instead looks to enhance the data once it has already been received (Washbourne, 2010; Pica, 2016). The embodiments of the present invention provide for a method for obtaining enhanced data by accurately selecting the seismic velocity, which in turn results in optimized seismic pre-stack time and pre-stack depth imaging.

The prior art does not teach or describe the approach of *P*-wave velocity selection based on density volume as in the embodiments of the present invention. Consequently, this approach when applied in the current field of art as part of the data acquisition steps. It would provide advantage in characterizing reservoirs enabling a user to perform better mapping of the target, proper well placement, and better reserves' estimation.

The embodiments of the present invention provide for a method for obtaining an enhanced seismic data, the method comprising: determining a velocity volume for a subsurface region of interest; determining a density volume for the subsurface region of interest. Interpolating wells-density-logs along seismic interpretation horizon; computing an impedance background model using the velocity and density volumes of the subsurface region of interest; applying spectral blueing for boosting lessened higher frequencies of a seismic band; scaling of seismic amplitudes to reflectivity. In order to create a seismic inverted perturbed data stack; selecting a *P* wave seismic velocity using the seismic inverted perturbed data stack; computing velocity perturbations of the selected P wave seismic velocity to generate an accurate *P* wave seismic velocity. The application of the accurate *P* wave seismic velocity in acquiring the enhanced seismic data.

In these embodiments, the subsurface region of interest is a low reflectivity reservoir. In some embodiments, the low reflectivity reservoir is a low *P* wave and *S* impedance contrast reservoir. In some embodiments, the low reflectivity reservoir type is Arab reservoir's carbonate rock lithology with heterogeneous rock types. In the embodiments of the present invention, the accurate *P* wave seismic velocity is essential for determining optimized seismic pre-stack time, pre-stack depth images, and depth conversion.

In some embodiments, the velocity and density volumes comprising data indicative of at least one seismic survey of the subsurface region of interest. In other embodiments, the velocity volume is an indication of seismic velocities at each position in the subsurface region of interest. In embodiments of the present invention, the wells-density-logs are real density measurements performed in drilled boreholes.

Other aspects of the present invention, further provide for a non-transitory computer readable medium storing specific computer-executable instructions for obtaining an enhanced seismic data in low reflectivity reservoirs. When executed by a processor, cause a computer system to automatically at least: determining a velocity volume for the low reflectivity reservoirs; determining a density volume for the low reflectivity reservoirs by interpolating wells-density-logs along seismic interpretation horizon. Computing an impedance background model using the velocity and density volumes of the low reflectivity reservoirs. Applying spectral blueing for boosting lessened higher frequencies of a seismic band; scaling of seismic amplitudes to reflectivity, to create a seismic inverted perturbed data stack. Selecting a *P* wave seismic velocity using the seismic inverted perturbed data stack; computing velocity perturbations of the selected P wave seismic velocity to generate an accurate *P* wave seismic velocity; applying the accurate *P* wave seismic velocity in acquiring the enhanced seismic data in the low reflectivity reservoirs.

In these aspects of the present invention, the subsurface region of interest is a low reflectivity reservoir. In these aspects, the low reflectivity reservoir is a low *P* wave and *S* impedance contrast reservoir. In some aspects, the low reflectivity reservoirs are Arab reservoir's carbonate rock lithology with heterogeneous rock types.

In some aspects, the accurate *P* wave seismic velocity is essential for determining optimized seismic pre-stack time, pre-stack depth images, and depth conversion. In other aspects, the velocity and density volumes comprising data indicative of at least one seismic survey in the subsurface region of interest. In different aspects, the velocity volume is an indication of seismic velocities at each position in the low reflectivity reservoirs. In some aspects, the wells-density-logs are real density measurements performed in drilled boreholes.

Different embodiments of the present invention, additionally present for a system for providing an enhanced seismic data, the system comprising: (a) a computer server that stores a plurality of seismic data sets of a subsurface region of interest; (b) One or more computer storage media having computer-usable instructions that, when used by one or more computing devices, cause the one or more computing devices to perform a method for obtaining the enhanced seismic data by selecting an accurate *P* wave seismic velocity, the method comprising: determining a velocity volume for the subsurface region of interest; determining a density volume for the subsurface region of interest, by interpolating wells-density-logs along seismic interpretation horizon; computing an impedance background model using the velocity and density volumes of the subsurface region of interest; applying spectral blueing for boosting lessened higher frequencies of a seismic band; scaling of seismic amplitudes to reflectivity, to create a seismic inverted perturbed data stack; selecting a *P* wave seismic velocity using the seismic inverted perturbed data stack; computing velocity perturbations of the selected *P* wave seismic velocity to generate the accurate *P* wave seismic velocity; applying the accurate *P* wave seismic velocity in acquiring the enhanced seismic data.

In the embodiments of the present invention, the subsurface region of interest is a low reflectivity reservoir type. In these embodiments, the low reflectivity reservoir is a low *P* wave and *S* impedance contrast reservoir. In some embodiments, the low reflectivity reservoir type is Arab reservoir's carbonate rock lithology with heterogeneous rock types.

In some embodiments, the accurate *P* wave seismic velocity is essential for determining optimized seismic pre-stack time, pre-stack depth images, and depth conversion. In some embodiments, the velocity and density volumes comprising data indicative of at least one seismic survey in the low reflectivity reservoirs. In embodiments of the present invention, the velocity volume is an indication of seismic velocities at each position in the subsurface region of interest. In different embodiments, the wells-density-logs are real density measurements performed in drilled boreholes.

The embodiments of the present invention provide for a novel method and system to accurately select the seismic velocity, which is the most important processing step that in turn paves the way for proper seismic pre-stack time and pre-stack depth imaging. The depth conversion using accurate seismic velocity will be optimally done, therefore it will reduce the depth prediction errors and decrease any drilling uncertainties accordingly. The present invention provides different advantages in characterizing reservoirs enabling a user to perform better mapping of the target, proper well placement, and better reserves' estimation.

The subject matter of the embodiments of the present invention is described with specificity herein to meet statutory requirements. Terms should not be interpreted as implying any particular order among or between various steps herein disclosed unless and except when the order of individual steps is explicitly described.

### EXAMPLES

### Example 1: Case of Experimental Application

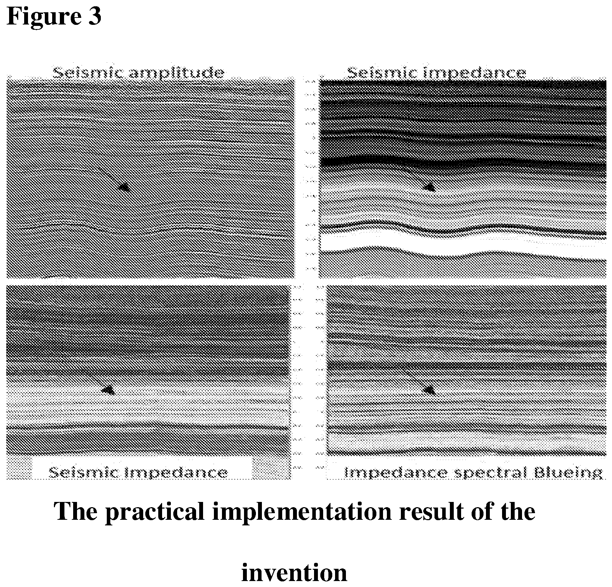

Seismic section amplitude against impedance and the impedance with spectral blueing is showing high-resolution details as pointed out by black arrow in **Figure 3****.** It should be noted and understood that there can be improvements and modifications made of the present invention described in detail above without departing from the scope of the invention as set forth in the accompanying claims.

### References:

Jon F. Claerbout; "Fundamentals of Geophysical Data Processing, p. 246-56. Book: ISBN 0-86542-305-9. 1985.
Gardner, G.H.F.; Gardner L.W.; Gregory A.R. (1974). "Formation velocity and density: the diagnostic basics for stratigraphic traps." Geophysics. 39: 770-780.
Pica, Antonio, Patrice Guillaume, & Gilles Lambare, "System and method of high definition tomography and resolution for use in generating velocity models and reflectivity images;" U.S. Patent No. 9,476,996 B2; 2016.
John Washbourne and Earl Frederic Herkenhoff, "Optimizing seismic processing and amplitude inversion utilizing statistical comparisons of seismic to well control data," U.S. 7,826,973 B2; 2010.
Yadav, Ashok, Jay Prakash Yadav, Ashutosh Garg*, K Hemalatha, "Thin Bed Resolution Using Seismic Spectral Blueing Method: A Case Study from East Coast of India," 8th Biennial International Conference & Exposition on Petroleum Geophysics, 2010.

## Claims

1. A method for obtaining an enhanced seismic data (200), the method comprising:
determining a velocity volume for a subsurface region of interest (202), wherein the velocity volume is an indication of seismic velocities at each point in the region of interest and wherein the subsurface region of interest is a low reflectivity reservoir type;
determining a density volume for the subsurface region of interest, by interpolating wells-density-logs along a seismic interpretation horizon (204), wherein the wells-density-logs are real density measurements performed in drilled boreholes;
computing an impedance background model using the velocity and density volumes of the subsurface region of interest (206);
the method being **characterized in**
scaling of seismic amplitudes of seismic data of a seismic band of the subsurface region of interest to reflectivity, to create a seismic inverted perturbed data stack (208);
applying spectral blueing for boosting lessened higher frequencies of the seismic band, wherein the spectral blueing comprises designing and applying one or more operators to the seismic data of the seismic band to enhance the lessened higher frequencies of the seismic band;
selecting a P wave seismic velocity using the seismic inverted perturbed data stack;
computing velocity perturbations of the selected *P* wave seismic velocity to generate an accurate *P* wave seismic velocity (212); and
applying the accurate *P* wave seismic velocity in acquiring the enhanced seismic data (216) from the seismic data.

2. The method of claim 1, wherein the low reflectivity reservoir is a low *P* wave and S impedance contrast reservoir, or wherein the low reflectivity reservoir type is Arab carbonate rock lithology with heterogeneous rock types.

3. A computer program storing specific computer- executable instructions for obtaining an enhanced seismic data in low reflectivity reservoirs, when executed by a processor, cause a computer system to automatically perform the method of any one of the claims 1-2.

4. A system for providing an enhanced seismic data, the system comprising:
(a) a computer server (102) that stores a plurality of seismic data sets of a subsurface region of interest;
(b) One or more computer storage media (104) having computer-usable instructions that, when used by one or more computing devices, cause the one or more computing devices to perform a method for obtaining the enhanced seismic data by selecting an accurate *P* wave seismic velocity, the method comprising:
determining a velocity volume for the subsurface region of interest (202), wherein the velocity volume is an indication of seismic velocities at each point in the region of interest and wherein the subsurface region of interest is a low reflectivity reservoir type;
determining a density volume for the subsurface region of interest, by interpolating wells-density-logs along a seismic interpretation horizon (204), wherein the wells-density-logs are real density measurements performed in drilled boreholes;
computing an impedance background model using the velocity and density volumes of the subsurface region of interest (206);
the system being **characterized in that** the one or more computing devices are configured to further perform following method steps:
scaling of seismic amplitudes of seismic data of a seismic band of the subsurface region of interest to reflectivity, to create a seismic inverted perturbed data stack (210);
applying spectral blueing for boosting lessened higher frequencies of a seismic band (208), wherein the spectral blueing comprises designing and applying one or more operators to the seismic data of the seismic band to enhance the lessened higher frequencies of the seismic band;
selecting a *P* wave seismic velocity using the seismic inverted perturbed data stack (212);
computing velocity perturbations of the selected *P* wave seismic velocity to generate the accurate *P* wave seismic velocity (214); and
applying the accurate *P* wave seismic velocity in acquiring the enhanced seismic data (216) from the seismic data.

5. The system of claim 4, wherein the low reflectivity reservoir is a low *P* wave and *S* impedance contrast reservoir, or wherein the low reflectivity reservoir type is Arab carbonate rock lithology with heterogeneous rock types.

## Patentansprüche

1. Verfahren zum Erhalten von verbesserten seismischen Daten (200), wobei das Verfahren Folgendes umfasst:
Bestimmen eines Geschwindigkeitsvolumens für eine unterirdische Region von Interesse (202), wobei das Geschwindigkeitsvolumen eine Angabe von seismischen Geschwindigkeiten an jedem Punkt in der Region von Interesse ist und wobei die unterirdische Region von Interesse ein Reservoirtyp mit niedrigem Reflexionsvermögen ist;
Bestimmen eines Dichtevolumens für die unterirdische Region von Interesse durch Interpolieren von Bohrungsdichteprotokollen entlang eines seismischen Interpretationshorizonts (204), wobei die Bohrungsdichteprotokolle reale Dichtemessungen sind, die in gebohrten Bohrlöchern durchgeführt werden;
Berechnen eines Impedanzhintergrundmodells unter Verwendung der Geschwindigkeits- und Dichtevolumina der unterirdischen Region von Interesse (206);
wobei das Verfahren **gekennzeichnet ist durch**
Skalieren von seismischen Amplituden von seismischen Daten eines seismischen Bandes der unterirdischen Region von Interesse auf Reflexionsvermögen, um einen seismischen invertierten gestörten Datenstapel (208) zu erzeugen;
Anwenden von Spektralbläuung zum Verstärken von verringerten höheren Frequenzen des seismischen Bandes, wobei die Spektralbläuung das Entwerfen und Anwenden eines oder mehrerer Operatoren auf die seismischen Daten des seismischen Bandes umfasst, um die verringerten höheren Frequenzen des seismischen Bandes zu verbessern;
Auswählen einer seismischen *P*-Wellen-Geschwindigkeit unter Verwendung des seismischen invertierten gestörten Datenstapels;
Berechnen von Geschwindigkeitsstörungen der ausgewählten seismischen *P-*Wellen-Geschwindigkeit, um eine genaue seismische *P*-Wellen-Geschwindigkeit zu erzeugen (212); und
Anwenden der genauen seismischen *P*-Wellen-Geschwindigkeit beim Erfassen der verbesserten seismischen Daten (216) aus den seismischen Daten.

2. Verfahren nach Anspruch 1, wobei das Reservoir mit niedrigem Reflexionsvermögen ein Kontrastreservoir mit niedriger *P*-Wellen- und *S*-Impedanz ist oder wobei der Reservoirtyp mit niedrigem Reflexionsvermögen arabische Carbonatgesteinslithologie mit heterogenen Gesteinstypen ist.

3. Computerprogramm, das spezifische computerausführbare Anweisungen zum Erhalten von verbesserten seismischen Daten in Reservoirs mit niedrigem Reflexionsvermögen speichert, die bei Ausführung durch einen Prozessor bewirken, dass ein Computersystem das Verfahren nach einem der Ansprüche 1-2 automatisch durchführt.

4. System zum Bereitstellen von verbesserten seismischen Daten, wobei das System Folgendes umfasst:
(a) einen Computerserver (102), der mehrere seismische Datensätze einer unterirdischen Region von Interesse speichert;
(b) ein oder mehrere Computerspeichermedien (104) mit computerverwendbaren Anweisungen, die bei Verwendung durch eine oder mehrere Rechenvorrichtungen bewirken, dass die eine oder die mehreren Rechenvorrichtungen ein Verfahren zum Erhalten der verbesserten seismischen Daten durch Auswählen einer genauen seismischen *P*-Wellen-Geschwindigkeit durchführen, wobei das Verfahren Folgendes umfasst:
Bestimmen eines Geschwindigkeitsvolumens für die unterirdische Region von Interesse (202), wobei das Geschwindigkeitsvolumen eine Angabe von seismischen Geschwindigkeiten an jedem Punkt in der Region von Interesse ist und wobei die unterirdische Region von Interesse ein Reservoirtyp mit niedrigem Reflexionsvermögen ist;
Bestimmen eines Dichtevolumens für die unterirdische Region von Interesse durch Interpolieren von Bohrungsdichteprotokollen entlang eines seismischen Interpretationshorizonts (204), wobei die Bohrungsdichteprotokolle reale Dichtemessungen sind, die in gebohrten Bohrlöchern durchgeführt werden;
Berechnen eines Impedanzhintergrundmodells unter Verwendung der Geschwindigkeits- und Dichtevolumina der unterirdischen Region von Interesse (206);
wobei das System **dadurch gekennzeichnet ist, dass** die eine oder die mehreren Rechenvorrichtungen konfiguriert sind, um ferner die folgenden Verfahrensschritte durchzuführen:
Skalieren von seismischen Amplituden von seismischen Daten eines seismischen Bandes der unterirdischen Region von Interesse auf Reflexionsvermögen, um einen seismischen invertierten gestörten Datenstapel (210) zu erzeugen;
Anwenden von Spektralbläuung zum Verstärken von verringerten höheren Frequenzen eines seismischen Bandes (208), wobei die Spektralbläuung das Entwerfen und Anwenden eines oder mehrerer Operatoren auf die seismischen Daten des seismischen Bandes umfasst, um die verringerten höheren Frequenzen des seismischen Bandes zu verbessern;
Auswählen einer seismischen *P*-Wellen-Geschwindigkeit unter Verwendung des seismischen invertierten gestörten Datenstapels (212);
Berechnen von Geschwindigkeitsstörungen der ausgewählten seismischen *P-*Wellen-Geschwindigkeit, um die genaue seismische *P*-Wellen-Geschwindigkeit zu erzeugen (214); und
Anwenden der genauen seismischen *P*-Wellen-Geschwindigkeit beim Erfassen der verbesserten seismischen Daten (216) aus den seismischen Daten.

5. System nach Anspruch 4, wobei das Reservoir mit niedrigem Reflexionsvermögen ein Kontrastreservoir mit niedriger *P*-Wellen- und *S*-Impedanz ist oder wobei der Reservoirtyp mit niedrigem Reflexionsvermögen arabische Carbonatgesteinslithologie mit heterogenen Gesteinstypen ist.

## Revendications

1. Un procédé d'obtention de données sismiques renforcées (200), le procédé comprenant :
la détermination (202) d'une vitesse volumique pour une région d'intérêt en sous-sol, la vitesse volumique étant une indication de vitesses sismiques en chaque point de la région d'intérêt, et la région d'intérêt en sous-sol étant d'un type réservoir à faible réflectivité ;
la détermination (204) d'une densité volumique pour la région d'intérêt en sous-sol, par interpolation de diagraphies de densité des puits le long d'un horizon d'interprétation sismique, les diagraphies de densité des puits étant des mesures de densité réelles effectuées dans des sondages forés ;
le calcul (206) d'un modèle de base d'impédance en utilisant la vitesse et la densité volumiques de la région d'intérêt en sous-sol ;
le procédé étant **caractérisé par** :
la normalisation (208) à la réflectivité des amplitudes de données sismiques d'une bande sismique de la région d'intérêt en sous-sol, pour créer une sommation de données sismiques perturbées inversées ;
l'application d'un blueing spectral pour renforcer les fréquences supérieures amoindries de la bande sismique, le blueing spectral comprenant la création et l'application d'un ou plusieurs opérateurs aux données sismiques de la bande sismique pour renforcer les fréquences supérieures amoindries de la bande sismique ;
la sélection d'une vitesse sismique des ondes P en utilisant la sommation de données sismiques perturbées inversées ;
le calcul (212) de perturbations de vitesse de la vitesse sismique des ondes *P* pour générer une vitesse sismique précise des ondes *P* ; et
l'application (216) de la vitesse sismique précise des ondes *P* pour l'acquisition des données sismiques renforcées à partir des données sismiques.

2. Le procédé de la revendication 1, dans lequel le réservoir à faible réflectivité est un réservoir à faible contraste d'impédance des ondes *P* et *S,* ou dans lequel le type de réservoir à faible réflectivité est une lithologie rocheuse de carbonate arabe avec des types rocheux hétérogènes.

3. Un programme informatique stockant des instructions spécifiques exécutables par calculateur pour obtenir des données sismiques renforcées pour des réservoirs à faible réflectivité qui, lorsqu'elles sont exécutées par un processeur, font en sorte qu'un système informatique mette en œuvre automatiquement le procédé de l'une des revendications 1 à 2.

4. Un système pour produire des données sismiques renforcées, le système comprenant :
(a) un serveur informatique (102) qui stocke une pluralité de jeux de données sismiques d'une région d'intérêt en sous-sol ;
(b) un ou plusieurs supports de stockage informatiques (104) avec des instructions utilisables par calculateur qui, lorsqu'elles sont exécutées par un ou plusieurs dispositifs informatiques, font en sorte que les un ou plusieurs dispositifs informatiques mettent en œuvre un procédé d'obtention des données sismiques renforcées par sélection d'une vitesse sismique précise des ondes P, le procédé comprenant :
la détermination (202) d'une vitesse volumique pour une région d'intérêt en sous-sol, la vitesse volumique étant une indication de vitesses sismiques en chaque point de la région d'intérêt, et la région d'intérêt en sous-sol étant d'un type réservoir à faible réflectivité ;
la détermination (204) d'une densité volumique pour la région d'intérêt en sous-sol, par interpolation de diagraphies de densité des puits le long d'un horizon d'interprétation sismique, les diagraphies de densité des puits étant des mesures de densité réelles effectuées dans des sondages forés ;
le calcul (206) d'un modèle de base d'impédance en utilisant la vitesse et la densité volumiques de la région d'intérêt en sous-sol ;
le système étant **caractérisé en ce que** les un ou plusieurs dispositifs informatiques sont configurés pour exécuter en outre les étapes de procédé suivantes :
la normalisation (210) à la réflectivité des amplitudes de données sismiques d'une bande sismique de la région d'intérêt en sous-sol, pour créer une sommation de données sismiques perturbées inversées ;
l'application (208) d'un blueing spectral pour renforcer les fréquences supérieures amoindries de la bande sismique, le blueing spectral comprenant la création et
l'application d'un ou plusieurs opérateurs aux données sismiques de la bande sismique pour renforcer les fréquences supérieures amoindries de la bande sismique ;
la sélection (212) d'une vitesse sismique des ondes *P* en utilisant la sommation de données sismiques perturbées inversées ;
le calcul (214) de perturbations de vitesse de la vitesse sismique des ondes *P* pour générer une vitesse sismique précise des ondes *P* ; et
l'application (216) de la vitesse sismique précise des ondes *P* pour l'acquisition des données sismiques renforcées à partir des données sismiques.

5. Le système de la revendication 4, dans lequel le réservoir à faible réflectivité est un réservoir à faible contraste d'impédance des ondes P et *S,* ou dans lequel le type de réservoir à faible réflectivité est une lithologie rocheuse de carbonate arabe avec des types rocheux hétérogènes.
